# EUROPEAN PATENT SPECIFICATION

(11) **EP 3 168 643 B1**
(45) Date of publication and mention of the grant of the patent: **30.09.2020**
(21) Application number: 16195054.8
(22) Date of filing: 21.10.2016
(51) Int. Cl.: G01S 17/931, G01S 7/481, G01S 7/497, G01S 13/931

(54) **DEVICE FOR FIXING AN OPTICAL SENSOR TO A MOTOR VEHICLE WITH ADJUSTING DEVICE, SENSOR ASSEMBLY AS WELL AS MOTOR VEHICLE**
VORRICHTUNG ZUR BEFESTIGUNG EINES OPTISCHEN SENSORS AN EINEM KRAFTFAHRZEUG MIT JUSTAGEEINRICHTUNG, SENSORANORDNUNG SOWIE KRAFTFAHRZEUG
DISPOSITIF DE FIXATION D'UN CAPTEUR OPTIQUE À UN VÉHICULE AUTOMOBILE AU MOYEN D'UN DISPOSITIF DE RÉGLAGE, ENSEMBLE CAPTEUR ET VÉHICULE AUTOMOBILE

(30) Priority: 16.11.2015 DE 102015119708
(43) Date of publication of application: 17.05.2017
(73) Proprietor: Valeo Schalter und Sensoren GmbH, 74321 Bietigheim-Bissingen (DE)
(72) Inventor: Prochazka, Jaroslav, 190 00 Prague (CZ); Bodak, Jan, 190 00 Prague (CZ); Benda, Petr, 190 00 Prague (CZ)
(74) Representative: Kluth, Philipp

(56) References cited:
- EP-A1- 2 786 904
- EP-A1- 2 952 388
- DE-A1- 10 002 956
- DE-A1-102010 050 184
- DE-A1-102010 056 052
- JP-A- 2005 091 376
- US-A1- 2003 193 397
- US-A1- 2004 239 574
- US-A1- 2006 117 585
- US-A1- 2007 242 339

## Description

The present invention relates to a device for fixing an optical sensor to a motor vehicle, including a retaining frame, which has a receiving space for the optical sensor and which can be disposed on the motor vehicle, including a bearing device, by means of which the optical sensor is supportable on the retaining frame inclinable around a pivot axis, and including an adjusting device for adjusting an inclination of the optical sensor around the pivot axis, wherein the adjusting device has a set screw, by the rotation of which the adjustment of the inclination of the optical sensor by means of the adjusting device can be effected. Further, the present invention relates to a sensor assembly with such a device and to an optical sensor. Finally, the present invention relates to a motor vehicle.

Presently, the interest is in particular directed to an optical sensor for a motor vehicle. Such an optical sensor can for example serve for capturing objects or obstacles in an environmental region of the motor vehicle. The optical sensor can for example be formed as a laser scanner or as a lidar sensor. The optical sensor can for example be disposed in a front area of the motor vehicle, in particular in an area of the grille. A transmit signal or light can be emitted by the optical sensor, which is then reflected by the object. The transmit signal reflected by the object can then again be received by the optical sensor. Based on the propagation time between the emission of the transmit signal and the reception of the reflected transmit signal, a distance between the motor vehicle and the object can then for example be determined.

In order to be able to perform reliable measurements by the optical sensor, it is required to precisely orient the optical sensor, which is disposed on the motor vehicle. Usually, the optical sensor is disposed on the motor vehicle with a corresponding device, which has a retaining frame. The optical sensor can be supported on this retaining frame inclinable or rotatable around a pivot axis. Further, the device can have a corresponding adjusting device, by means of which the inclination of the optical sensor around the pivot axis can be adjusted. This adjusting device can for example include a corresponding set screw, which can be rotated to adjust the inclination of the optical sensor. Therein, it is required that the adjusting device is formed such that precise adjustment of the inclination of the optical sensor is allowed for example with manual operation of the set screw. In addition, the device is to be configured such that the optical sensor is reliably retained in this desired position after adjusting the inclination.

Hereto, DE 10 2010 056 052 A1 describes an optical measuring device for a vehicle, which has at least one sensor device. The sensor device is connectable to the vehicle via a retaining device, wherein the at least one sensor device is supported on the retaining device pivotable around a pivot axis. Therein, manual adjusting means are provided, which effect the pivoting movement of the sensor device. Further, the manual adjusting means are coupled to the sensor device via deflecting means, wherein a movement of the manual adjusting means causes a guided movement of the deflecting means, which is effected orthogonally to the pivot axis, and causes a tilting movement of the sensor device around the pivot axis.

JP 2005 091376 A discloses a radar means for emitting a beam and receiving a reflected beam of a detected object. The radar means is attached to a front portion 33 of a vehicle by an adjusting means for adjusting an attachment angle θ.

US 2003/193397 A1 discloses an anti-thief security sensor assembly in which the angle of an optical unit can be adjusted over a wide range without increasing the size thereof and in which an optical axis can easily be adjusted. The security sensor assembly includes an optical unit mounted at its lateral sides on a support member of a device body for rotation about a horizontal pivot axis for projecting or receiving a detecting wave.

US2007/242339 A1 a communications system, and in particular, a system communicating to or from vehicles using modulated electromagnetic radiation in the visible, infrared or other nearby spectra.

EP 2 786 904 A1 discloses a holding device for attachment to a motor vehicle, preferably to a motor vehicle bend. The holding device comprises a support section, preferably two longitudinal members, for mounting to the motor vehicle and a holding section for holding a functional element, in particular a sensor device, and for positioning adjacent to an exit opening for a fastening device for a spare wheel for the motor vehicle. The holding section is pivotable about a pivot axis, from a first state in which it at least partially closes the exit opening, into a second state in which it releases the exit opening such that the spare wheel can be taken.

It is the object of the present invention to demonstrate a solution, how the adjustment of an optical sensor of a motor vehicle of the initially mentioned kind can be more reliably allowed.

According to the invention, this object is solved by a device, by a sensor assembly as well as by a motor vehicle having the features according to the respective independent claims. Advantageous implementations of the invention are the subject matter of the dependent claims, of the description and of the figures.

A device according to the invention serves for fixing an optical sensor to a motor vehicle. The device includes a retaining frame, which has a receiving space for the optical sensor and which can be disposed on the motor vehicle. In addition, the device includes a bearing device, by means of which the optical sensor is supported on the retaining frame inclinable around a pivot axis. Further, the device includes an adjusting device for adjusting an inclination of the optical sensor around the pivot axis, wherein the adjusting device has a set screw, which is designed such that by the rotation of the set screw the adjustment of the inclination of the optical sensor by means of the adjusting device is effected. The set screw has a first area with a first thread engaging with a corresponding thread of a first movement element of the adjusting device. Further, the set screw has a second area with a second thread engaging with a corresponding thread of a second movement element of the adjusting device. Therein, the first thread and the second thread have pitches different from each other.

The optical sensor can be fixed to the motor vehicle by the device. In addition, the inclination of the optical sensor can be adjusted by the device. The device has the retaining frame, which can for example be formed of a corresponding metal. The retaining frame can be fixed to the body of the motor vehicle. The optical sensor can then be disposed on the retaining frame. For this purpose, the device has the bearing device, by means of which the optical sensor is retained on the retaining frame such that it is inclinable or pivotable around a pivot axis. Therein, the device is in particular formed such that the pivot axis is disposed perpendicular to a main emitting direction of the optical sensor. In addition, the pivot axis can extend parallel to a vehicle transverse axis of the motor vehicle. In addition, the device has the adjusting device, by means of which the inclination of the optical sensor can be adjusted. Therein, the adjusting device has a set screw, which can for example be manually operated with the aid of a corresponding tool. By the rotation of the set screw, movement of the adjusting device can in particular be effected. As a result of the movement of the adjusting device, the optical sensor can then be moved. Thus, the optical sensor can be moved relative to the retaining frame and thus be rotated around the pivot axis by the rotation of the set screw.

The adjusting device has a first movement element and a second movement element. Therein, it can in particular be provided that the first movement element is moved relative to the second movement element by rotating the set screw. By the relative movement of the first movement element to the second movement element, the inclination of the optical sensor can be adjusted. Therein, it is provided that the set screw has a first area and a second area separated from the first area. In particular, the set screw can be formed in the manner of a threaded pin. Therein, the set screw has a first thread in the first area. The set screw has a second thread in the second area, which has another pitch compared to the first thread. The pitch of the respective threads describes the path, which the set screw is driven in upon one revolution. Therein, the first thread engages with the corresponding thread of the first movement part and the second thread engages with the corresponding thread of the second movement element. By the rotation of the set screw by the different thread pitches, a low transmission of revolutions of the set screw to the movement of the adjusting device can be achieved. Thus, the inclination of the optical sensor can be simply and precisely performed. In particular, the inclination of the optical sensor can be manually effected by a corresponding tool, by which the set screw is rotated.

Preferably, the first and the second movement element are movable relative to each other along a main extension direction of the set screw by the rotation of the set screw. Therein, the main extension direction of the set screw can correspond to a direction of movement of the adjusting device. The first movement element is moved relative to the second movement element along the main extension direction of the set screw upon a revolution of the set screw by the difference of the thread pitches of the first and the second thread. Thus, a type of reduction can be provided, which allows a particularly precise adjustment of the inclination of the optical sensor.

In a further embodiment, the first movement element can be connected to the optical sensor and the second movement element is rotatably supported on the retaining frame. Therein, the first movement element can for example be fixed to the optical sensor or to a housing of the optical sensor by a corresponding screw. The second movement element can be rotatably connected to the retaining frame. For example, a corresponding ball joint can be formed between the second movement element and the retaining frame. Thus, an adjusting device can be provided, which is simply and inexpensively formed.

In accordance to the invention, the first movement element has a first threaded nut with the thread corresponding to the first thread and a first envelope element, which surrounds the first threaded nut at least in certain areas, and the second movement element has a second threaded nut with the thread corresponding to the second thread and a second envelope element, which surrounds the second threaded nut at least in certain areas. Each of the movement elements can include a threaded nut, which has a corresponding female thread. The threaded nut can for example be manufactured from a corresponding metal. The first thread and the second thread of the set screw are each formed as a male thread. Therein, the first thread of the set screw engages with the female thread of the first threaded nut and the second thread engages with the female thread of the second threaded nut. In addition, each of the movement elements has a corresponding envelope element, which surrounds the threaded nut at least in certain areas. The envelope element can for example be formed of a corresponding plastic. For example, the first and the second envelope element can be produced by means of a corresponding injection process. Thus, the adjusting device can be provided in simple and inexpensive manner.

Furthermore, it is advantageous if the first threaded nut has a radial slit, which divides the threaded nut into two length areas, wherein the two length areas are formed such that at least one length area is elastically deformable by screwing the set screw into the threaded nut. The radial slit can be inserted in the threaded nut in certain areas. In a connecting area radially adjoining the slit, the two length areas of the first threaded nut can be connected to each other. By rotating the set screw into the first threaded nut, the first threaded nut can be deformed in the connecting area. It can also be provided that a length area of the first threaded nut is deformed. Therein, the deformation of the first threaded nut is effected such that at least one length area of the first threaded nut is elastically deformed after screwing in the set screw. Thereby, a force is exerted on the set screw, which secures the set screw within the first threaded nut. In other words, the first threaded nut can be formed in the manner of a self-retaining nut. Thus, the set screw can be prevented from being moved relative to the first threaded nut after adjusting the inclination of the optical sensor in reliable manner.

According to the invention, the first envelope element and the second envelope element are formed such that the second envelope element surrounds the first envelope element upon movement of the first movement element relative to the second movement element. Basically, it can also be provided that the first envelope element and the second envelope element are formed such that the first envelope element surrounds the second envelope element upon movement of the first movement element relative to the second movement element. The adjusting device can have a predetermined range of movement, in which the first movement element can be moved relative to the second movement element. Therein, the first and the second envelope element are formed such that they surround each other over the entire range of movement. For example, the respective envelope elements can have corresponding sleeves or hollow cylindrical areas, which are disposed concentrically to each other and which overlap each other. Thus, contamination of the set screw can be prevented and thus reliable operation of the adjusting device can be allowed.

In a further embodiment, the first movement element has a through-opening, through which a screw for fixing the first movement element to the optical sensor is passed. In the first movement element or in the first envelope element, a through-opening can be provided. It can also be provided that a corresponding sleeve is inserted in the first envelope element. A screw can then be passed through this through-opening or bore, which is screwed into the housing of the optical sensor. Thereby, a reliable mechanical connection between the first movement element and the optical sensor can be achieved.

Furthermore, it is advantageous if the second movement element has an elevation, which is inserted in a corresponding recess of the retaining frame for rotatably supporting the second movement element on the retaining frame. The elevation can be formed on the second movement element or on the second envelope element. A corresponding recess or opening can be provided on the retaining frame, into which the elevation is inserted. Therein, the elevation and the recess corresponding thereto can be formed in the manner of a bayonet joint. For example, the elevation can first be passed through the recess of the retaining frame and subsequently be rotated by 90°. Thus, a rotatable support of the second movement element relative to the retaining frame can be allowed in simple and inexpensive manner.

In a further configuration, the bearing device has two bearings, which are disposed on opposing sides of the retaining frame. The bearings can for example be formed as ball bearings or as slide bearings. In addition, the bearing device can have two screws, which can be screwed into corresponding threads of the optical sensor or into the housing of the optical sensor. Thus, a reliable support of the optical sensor to the retaining frame can be allowed by the bearing device. Thereby, it can be allowed that the optical sensor can be moved relative to the retaining frame by means of the adjusting device.

In a further configuration, the device has a spring element, which is disposed between the retaining frame and the optical sensor for providing a spring force acting on the optical sensor, wherein the spring force acts along a direction of movement of the adjusting device. The adjusting device can have a predetermined direction of movement, along which it can be moved by the rotation of the set screw. The adjusting device has the first movement element and the second movement element, which can be moved relative to each other by the rotation of the set screw. In addition, the optical sensor is movable relative to the retaining frame. Thus, the device has multiple components movable to each other, which can have a mechanical backlash. Now, the spring force is provided by the spring element such that it acts along the direction of movement of the adjusting device. Thus, it can be achieved that a backlash present in the adjusting device does not result in movement of the optical sensor with respect to the retaining frame. This guarantees that the adjusted inclination or angular position of the optical sensor is maintained after adjustment. In addition, the inclination of the sensor can be prevented from varying as a result of vibrations, which for example arise in the operation of the motor vehicle. Thus, the inclination of the optical sensor can be reliably adjusted.

Furthermore, it is advantageous if the spring element is formed of a wire and a first area of the spring element is connected to the retaining frame and a second area of the spring element is disposed on an elevation of the optical sensor. The spring element can for example be formed of a wire bracket, which is substantially U-shaped formed. Therein, the spring element is clamped between the optical sensor and the retaining frame. The wire of the spring element can have a first area, which is for example inserted in a corresponding opening of the retaining frame and thus is retained on the retaining frame. A second area of the spring element can for example be shaped such that it can be attached to a corresponding elevation of the optical sensor or the housing of the optical sensor. Thus, a spring element can be provided in simple and inexpensive manner.

A sensor assembly according to the invention includes a device according to the invention and an optical sensor. The optical sensor can have a corresponding transmitting unit for emitting a transmit signal in the form of light or laser radiation. In addition, the optical sensor can have a corresponding receiving unit, by means of which the transmit signal or light reflected by an object can be again received. The optical sensor can in particular be formed as a laser scanner or as a lidar sensor.

A motor vehicle according to the invention includes a sensor assembly according to the invention. The sensor assembly can for example be a part of a driver assistance system of the motor vehicle. For example, a distance between the motor vehicle and an object or an obstacle in the environmental region of the motor vehicle can be determined by the driver assistance system. The motor vehicle is in particular formed as a passenger car. The preferred embodiments presented with respect to the device according to the invention and the advantages thereof correspondingly apply to the sensor assembly according to the invention as well as to the motor vehicle according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim.

Now, the invention is explained in more detail based on preferred embodiments as well as with reference to the attached drawings.

There show:
- Fig. 1: a motor vehicle according to an embodiment of the present invention, which includes a sensor assembly;
- Fig. 2: the sensor assembly in a perspective view, wherein the sensor assembly has an optical sensor and a device of the optical sensor on the motor vehicle;
- Fig. 3: an adjusting device of the device in a perspective view;
- Fig. 4: the adjusting device according to Fig. 3 in a sectioned side view;
- Fig. 5: a detailed view of Fig. 4;
- Fig. 6: a first movement element of the adjusting device in a perspective view; and
- Fig. 7: the sensor assembly according to Fig. 2 in a sectioned side view.

In the figures, identical and functionally identical elements are provided with the same reference characters.

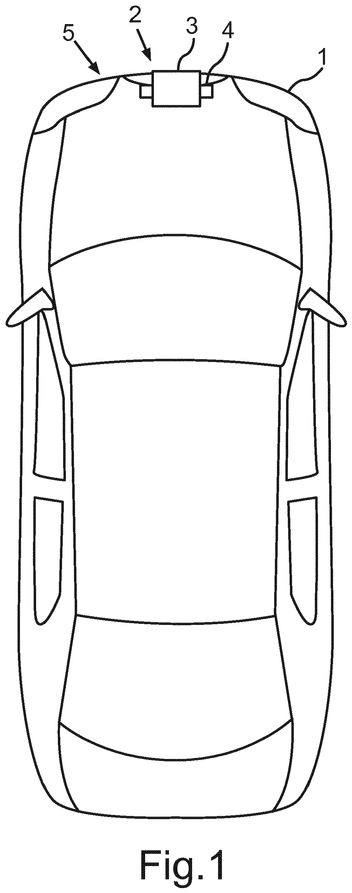

Fig. 1 shows a motor vehicle 1 according to an embodiment of the present invention in a plan view. Presently, the motor vehicle 1 is formed as a passenger car. The motor vehicle 1 includes a sensor assembly 2, which in turn includes an optical sensor 3 and a device 4 for fixing the optical sensor 3 to the motor vehicle 1. Presently, the sensor device 2 is disposed in a front area 5, in particular in an area of the grille of the motor vehicle 1.

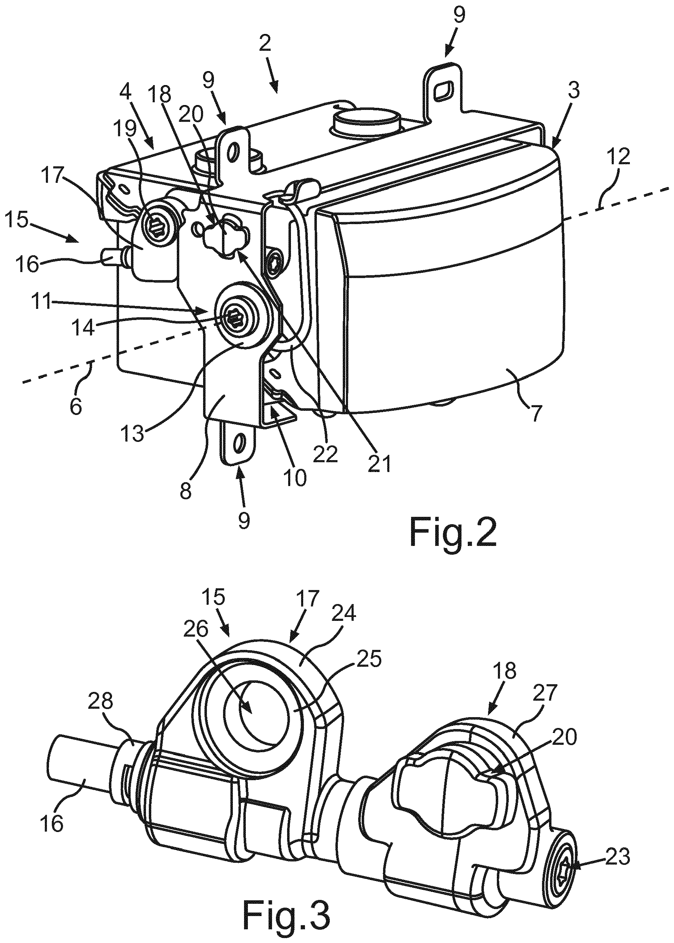

Fig. 2 shows the sensor assembly 2 in a perspective view. Therein, it is recognizable that the optical sensor 3 has a housing 6, which can for example be formed of plastic. Moreover, the optical sensor 3 includes a viewing window 7, via which sensor signals can be emitted and sensor signals reflected from objects can be again received. The optical sensor 3 is presently formed as a laser scanner. Objects in an environmental region of the motor vehicle 1 can be captured by the optical sensor 3.

The device 4 further has a retaining frame 8, which can for example be formed of a corresponding metal. The retaining frame 8 includes corresponding fixing elements 9, which are presently formed by tongues, in which a bore is respectively introduced. By the fixing element 9, the retaining frame 8 can be fixed to the motor vehicle 1. For this purpose, for example, corresponding screws can be passed through the bores. Moreover, the retaining frame 9 has a receiving area 10, in which the optical sensor 3 is inserted.

Further, the device includes a bearing device 11, by means of which the optical sensor 3 can be supported on the retaining frame 8 rotatable around a rotational axis 12. Preferably, the rotational axis 12 can be disposed perpendicular to a main transmitting direction of the optical sensor 3. The bearing device 11 has two bearings 13, which are pressed into the retaining frame 8. In addition, the bearing device 11 has two screws 14, which can be screwed into corresponding threads 45 of the optical sensor 3 or the housing 6. Therein, the two bearings 13 and the two screws 14 are disposed on opposing sides of the retaining frame 8. In the present representation, only one bearing 13 and one screw 14 are apparent.

Moreover, the device 4 has an adjusting device 15. The adjusting device 15 serves for adjusting an inclination of the optical sensor 3 around the rotational axis 12. The adjusting device 15 includes a set screw 16, which can be operated manually or by a corresponding tool. Further, the adjusting device 15 has a first movement element 17 and a second movement element 18, which can be moved relative to each other by the rotation of the set screw 16. Therein, the first movement element 17 is connected to the optical sensor 3 by means of a screw 19. The second movement element 18 includes an elevation 20, which is inserted in a recess 21 of the retaining frame 8. Thus, the second movement element 18 is supported rotatable to the retaining frame 8. Further, the device 4 includes a spring element 22 formed of a wire. As explained in more detail below, the spring element 22 is disposed between the optical sensor 3 and the retaining frame 8.

Fig. 3 shows the adjusting device 15 in a perspective view. Herein, the first movement element 17 and the second movement element 18 are apparent. Further, the set screw 16 is apparent, which is passed through the first movement element 17 and the second movement element 18. The set screw 16 has a screw head 23, into which a corresponding tool, for example a screwdriver, can be inserted to rotate the set screw 16. The first movement element 17 has a first envelope element 24, which can for example be formed of plastic. A sleeve 25 is inserted in the envelope element 24, which has a through-opening 26. The screw 19 can be passed through the through-opening 26 or the bore to fix the first movement element 17 to the optical sensor 3. The second movement element 18 includes a second envelope element 27, which can also be formed of plastic. Therein, the elevation 20 is a part of the second envelope element 27.

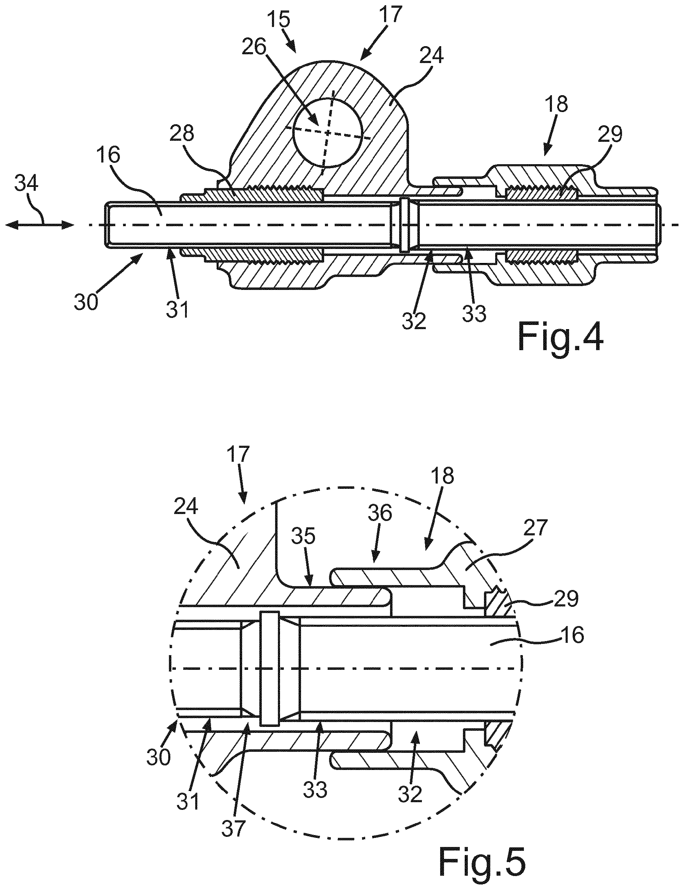

Fig. 4 shows the adjusting device 15 according to Fig. 3 in a sectioned side view. Herein, it is apparent that the first movement element 17 has a first threaded nut 28. The first envelope element 24 surrounds the first threaded nut 28 at least in certain areas. Further, the second movement element 18 has a second threaded nut 29. The second threaded nut 29 is completely surrounded by the second envelope element 27 in the present embodiment. The set screw 16 has a first area 30, which has a first thread 31. In addition, the set screw 16 has a second area 32, which has a second thread 33. The threads 31, 33 of the set screw are each formed as a male thread. Therein, the pitches of the first thread 31 and of the second thread 33 differ from each other. The pitch of the first thread 31 can be lower than the pitch of the second thread 33. For example, the first thread 31 can be formed as an M5 thread and the second thread 33 can be formed as an M6 thread. When the set screw 16 is rotated, the first movement element 17 and the second movement element 18 are moved relative to each other along the direction of movement 34. Therein, the relative movement of the movement elements 17, 18 corresponds to the difference of the thread pitches of the threads 31, 33. Thus, a reduction is virtually provided, in which a particularly precise adjustment of the inclination of the optical sensor 3 can be allowed.

Fig. 5 shows a detailed view of Fig. 4. Herein, it is apparent that the first envelope element 24 has a first sleeve 35. Further, the second envelope element 27 has a second sleeve 36. The respective sleeves 35, 36 are formed by a part of the respective envelope elements 24, 27. The sleeves 35, 36 are substantially hollow cylindrically formed and disposed concentrically to each other. Therein, the second sleeve 36 surrounds the first sleeve 35 at least in certain areas. The sleeves 35, 36 or the envelope elements 24, 27 are formed such that the second sleeve 36 surrounds at least a part of the first sleeve over the entire range of movement of the adjusting device 15. Thereby, dirt or liquid can be prevented from entering an interior 37 of the adjusting device 15, in which the set screw 16 is disposed.

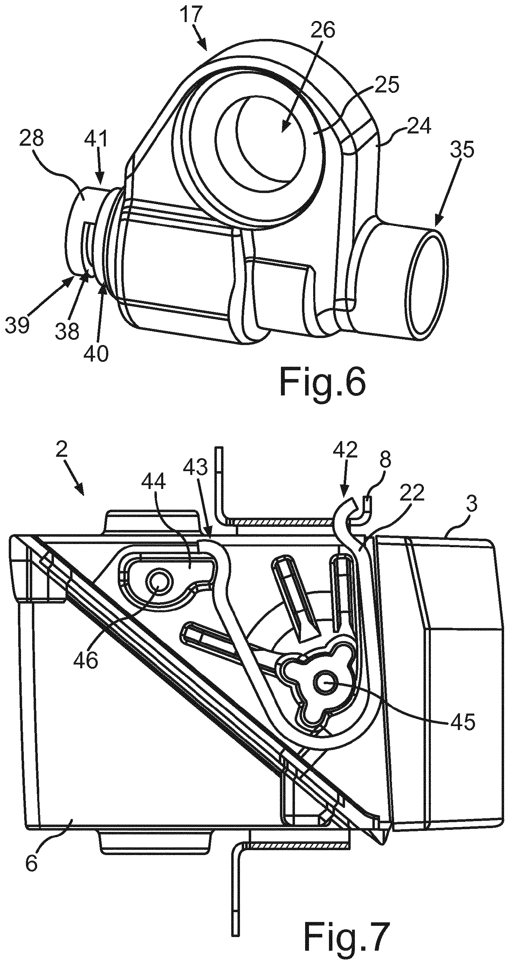

Fig. 6 shows the first movement element 17 in a perspective view. Herein, it is apparent that the first threaded nut 28 has a radial slit 38. The radial slit 38 divides the first threaded nut 28 in a first length area 39 and a second length area 40. The first length area 39 and the second length area 40 are connected to each other in a connecting area 41. Before inserting the set screw 16 into the first threaded nut 28, the first threaded nut 28 can be deformed. Thus, it can be achieved that the first length section 39 is elastically deformed by inserting the set screw 16 into the first threaded nut 28. Thus, a force is provided, which secures the set screw 16 within the first threaded nut 28. Thereby, the first threaded nut 28 is formed in the manner of a self-retaining nut.

Fig. 7 shows the sensor assembly 2 according to Fig. 2 in a sectioned side view. Herein, it is apparent that the spring element 22 is formed of a wire and substantially U-shaped. The spring element 22 has a first end or a first area 42, which is inserted in a corresponding opening of the retaining frame 8. In addition, the spring element 22 has a second end or a second area 43, which abuts on a corresponding elevation 44 of the housing 6 of the optical sensor 3. Thus, a spring force can be provided by the spring element 22, which acts along the direction of movement 34 of the adjusting device 15. Herein, it can be achieved that backlash present in the adjusting device 15 does not result in movement of the optical sensor 3 with respect to the retaining frame 8, even if the sensor assembly 2 is subjected to vibrations. By the spring element 22 and the first threaded nut 28, which is formed in the manner of a self-retaining nut, thus, the inclination of the optical sensor 3 can be reliably prevented from being varied in the operation of the motor vehicle 1 after adjustment thereof. Moreover, in Fig. 7, a thread 45 is apparent, into which the screw 14 of the bearing device 11 can be inserted. In addition, the housing 6 includes a thread 46, into which the screw 19 for fixing the first movement element 17 can be inserted.

## Claims

1. Device (4) for fixing an optical sensor (3) to a motor vehicle (1), including a retaining frame (8), which has a receiving space (10) for the optical sensor (3) and which can be disposed on the motor vehicle (1), including a bearing device (11), by means of which the optical sensor (3) is supported on the retaining frame (8) inclinable around a pivot axis (12), and including an adjusting device (15) for adjusting an inclination of the optical sensor (3) around the pivot axis (12), wherein the adjusting device (15) has a set screw (16), which is designed such that by the rotation of the set screw the adjustment of the inclination of the optical sensor (3) by means of the adjusting device (15) is effected,
wherein the set screw (16) has a first area (30) with a first thread (31), which engages with a corresponding thread of a first movement element (17) of the adjusting device (15), and a second area (32) with a second thread (33), which engages a corresponding thread of a second movement element (18) of the adjusting device (15), wherein the first thread (31) and the second thread (33) have pitches different from each other,
**characterized in that**
the first movement element (17) has a first threaded nut (28) with the thread corresponding to the first thread (31) and a first envelope element (24), which surrounds the first threaded nut (28) at least in certain areas, and that the second movement element (18) has a second threaded nut (29) with the thread corresponding to the second thread and a second envelope element (27), which surrounds the second threaded nut (29) at least in certain areas and that the first envelope element (24) and the second envelope element (27) are formed such that the second envelope element (27) surrounds the first envelope element (24) at least in certain areas in the movement of the first movement element (17) relative to the second movement element (18).

2. Device (4) according to claim 1,
**characterized in that**
the first movement element (17) and the second movement element (18) are movable relative to each other by the rotation of the set screw (16) along a main extension direction of the set screw (16).

3. Device (4) according to claim 1 or 2,
**characterized in that**
the first movement element (17) is connected to the optical sensor (3) and the second movement element (18) is rotatably supported on the retaining frame (8).

4. Device (4) according to claim 1,
**characterized in that**
the first threaded nut (28) has a radial slit (38), which divides the first threaded nut (28) into two length areas (39, 40), wherein the two length areas (39, 40) are formed such that at least one length area (39, 40) is elastically deformable by screwing the set screw (16) into the first threaded nut (28).

5. Device (4) according to any one of the preceding claims,
**characterized in that**
the first movement element (17) has a through-opening (26), through which a screw (19) for fixing the first movement element (17) to the optical sensor (3) is passed.

6. Device (4) according to any one of the preceding claims,
**characterized in that**
the second movement element (17) has an elevation (20), which is inserted in a corresponding recess (21) of the retaining frame (8) for rotatably supporting the second movement element (17) on the retaining frame (18).

7. Device (4) according to any one of the preceding claims,
**characterized in that**
the bearing device (11) has two bearings (13), which are disposed on opposing sides of the retaining frame (8).

8. Device (4) according to any one of the preceding claims,
**characterized in that**
the device (4) has a spring element (22), which is disposed between the retaining frame (8) and the optical sensor (3) for providing a spring force acting on the optical sensor (3), wherein the spring force acts along a direction of movement (34) of the adjusting device (15).

9. Device (4) according to claim 8,
**characterized in that**
the spring element (22) is formed of a wire and a first area (42) of the spring element (8) is connected to the retaining frame (8) and a second area (43) of the spring element (22) is disposed on a corresponding elevation (44) of the optical sensor (3).

10. Sensor assembly (2) with a device (4) according to any one of the preceding claims and with an optical sensor (3).

11. Motor vehicle (1) with a sensor assembly (2) according to claim 10.

## Patentansprüche

1. Vorrichtung (4) zum Befestigen eines optischen Sensors (3) an einem Kraftfahrzeug (1), beinhaltend einen Halterahmen (8), der einen Aufnahmeraum (10) für den optischen Sensor (3) aufweist und der am Kraftfahrzeug (1) anordenbar ist, mit einer Lagervorrichtung (11), mit deren Hilfe der optische Sensor (3) um eine Schwenkachse (12) neigbar am Halterahmen (8) gehalten wird, und mit einer Einstellvorrichtung (15) zum Einstellen einer Neigung des optischen Sensors (3) um die Schwenkachse (12), wobei die Einstellvorrichtung (15) eine Stellschraube (16) aufweist, die so gestaltet ist, dass durch die Drehung der Stellschraube die Einstellung der Neigung des optischen Sensors (3) mit Hilfe der Einstellvorrichtung (15) erfolgt,
wobei die Stellschraube (16) einen ersten Bereich (30) mit einem ersten Gewinde (31), das in ein entsprechendes Gewinde eines ersten Bewegungselements (17) der Einstellvorrichtung (15) eingreift, und einen zweiten Bereich (32) mit einem zweiten Gewinde (33), das in ein entsprechendes Gewinde eines zweiten Bewegungselements (18) der Einstellvorrichtung (15) eingreift, aufweist, wobei das erste Gewinde (31) und das zweite Gewinde (33) voneinander verschiedene Steigungen aufweisen,
**dadurch gekennzeichnet, dass**
das erste Bewegungselement (17) eine erste Gewindemutter (28) mit dem dem ersten Gewinde (31) entsprechenden Gewinde und ein erstes Hüllelement (24), das die erste Gewindemutter (28) zumindest in bestimmten Bereichen umgibt, aufweist und dass das zweite Bewegungselement (18) eine zweite Gewindemutter (29) mit dem dem zweiten Gewinde entsprechenden Gewinde und ein zweites Hüllelement (27), das die zweite Gewindemutter (29) zumindest in bestimmten Bereichen umgibt, aufweist und dass das erste Hüllelement (24) und das zweite Hüllelement (27) so ausgebildet sind, dass das zweite Hüllelement (27) das erste Hüllelement (24) bei der Bewegung des ersten Bewegungselements (17) relativ zum zweiten Bewegungselement (18) zumindest in bestimmten Bereichen umgibt.

2. Vorrichtung (4) nach Anspruch 1,
**dadurch gekennzeichnet, dass**
das erste Bewegungselement (17) und das zweite Bewegungselement (18) relativ zueinander durch die Drehung der Stellschraube (16) entlang einer Haupterstreckungsrichtung der Stellschraube (16) bewegbar sind.

3. Vorrichtung (4) nach Anspruch 1 oder 2,
**dadurch gekennzeichnet, dass**
das erste Bewegungselement (17) mit dem optischen Sensor (3) verbunden ist und das zweite Bewegungselement (18) drehbar am Halterahmen (8) getragen wird.

4. Vorrichtung (4) nach Anspruch 1,
**dadurch gekennzeichnet, dass**
die erste Gewindemutter (28) einen radialen Schlitz (38) aufweist, der die erste Gewindemutter (28) in zwei Längenbereiche (39, 40) unterteilt, wobei die beiden Längenbereiche (39, 40) so ausgebildet sind, dass zumindest ein Längenbereich (39, 40) durch Einschrauben der Stellschraube (16) in die erste Gewindemutter (28) elastisch verformbar ist.

5. Vorrichtung (4) nach einem der vorangehenden Ansprüche,
**dadurch gekennzeichnet, dass**
das erste Bewegungselement (17) eine Durchgangsöffnung (26) aufweist, durch die eine Schraube (19) zum Befestigen des ersten Bewegungselements (17) am optischen Sensor (3) geführt wird.

6. Vorrichtung (4) nach einem der vorangehenden Ansprüche,
**dadurch gekennzeichnet, dass**
das zweite Bewegungselement (17) eine Erhebung (20) aufweist, die in eine entsprechende Ausnehmung (21) des Halterahmens (8) zum drehbaren Halten des zweiten Bewegungselements (17) am Halterahmen (18) eingeführt wird.

7. Vorrichtung (4) nach einem der vorangehenden Ansprüche,
**dadurch gekennzeichnet, dass**
die Lagervorrichtung (11) zwei Lager (13) aufweist, die auf gegenüberliegenden Seiten des Halterahmens (8) angeordnet sind.

8. Vorrichtung (4) nach einem der vorangehenden Ansprüche,
**dadurch gekennzeichnet, dass**
die Vorrichtung (4) ein Federelement (22) aufweist, das zwischen dem Halterahmen (8) und dem optischen Sensor (3) angeordnet ist, um eine auf den optischen Sensor (3) wirkende Federkraft bereitzustellen, wobei die Federkraft entlang einer Bewegungsrichtung (34) der Einstellvorrichtung (15) wirkt.

9. Vorrichtung (4) nach Anspruch 8,
**dadurch gekennzeichnet, dass**
das Federelement (22) aus einem Draht ausgebildet ist und ein erster Bereich (42) des Federelements (8) mit dem Halterahmen (8) verbunden ist und ein zweiter Bereich (43) des Federelements (22) an einer entsprechenden Erhebung (44) des optischen Sensors (3) angeordnet ist.

10. Sensoranordnung (2) mit einer Vorrichtung (4) nach einem der vorangehenden Ansprüche und mit einem optischen Sensor (3).

11. Kraftfahrzeug (1) mit einer Sensoranordnung (2) nach Anspruch 10.

## Revendications

1. Dispositif (4) de fixation d'un capteur optique (3) sur un véhicule automobile (1), comprenant un cadre de retenue (8), qui a un espace de réception (10) pour le capteur optique (3) et qui peut être disposé sur le véhicule automobile (1), comprenant un dispositif de palier (11), au moyen duquel le capteur optique (3) est supporté sur le cadre de retenue (8) de manière inclinable autour d'un axe de pivotement (12), et comprenant un dispositif de réglage (15) pour régler une inclinaison du capteur optique (3) autour de l'axe de pivotement (12), le dispositif de réglage (15) ayant une vis de réglage (16) qui est conçue de sorte que, par la rotation de la vis de réglage, soit effectué le réglage de l'inclinaison du capteur optique (3) au moyen du dispositif de réglage (15),
la vis de réglage (16) ayant une première zone (30) avec un premier filetage (31), qui vient en prise avec un filetage correspondant d'un premier élément de mouvement (17) du dispositif de réglage (15), et une seconde zone (32) avec un second filetage (33), qui vient en prise avec un filetage correspondant d'un second élément de mouvement (18) du dispositif de réglage (15), le premier filetage (31) et le second filetage (33) ayant des pas différents l'un de l'autre,
**caractérisé en ce que**
le premier élément de mouvement (17) a un premier écrou fileté (28) avec le filetage correspondant au premier filetage (31) et un premier élément d'enveloppe (24), qui entoure le premier écrou fileté (28) au moins dans certaines zones, et **en ce que** le second élément de mouvement (18) a un second écrou fileté (29) avec le filetage correspondant au second filetage et un second élément d'enveloppe (27), qui entoure le second écrou fileté (29) au moins dans certaines zones et **en ce que** le premier élément d'enveloppe (24) et le second élément d'enveloppe (27) sont formés de sorte que le second élément d'enveloppe (27) entoure le premier élément d'enveloppe (24) au moins dans certaines zones lors du mouvement du premier élément de mouvement (17) par rapport au second élément de mouvement (18).

2. Dispositif (4) selon la revendication 1, **caractérisé en ce que**
le premier élément de mouvement (17) et le second élément de mouvement (18) sont mobiles l'un par rapport à l'autre par la rotation de la vis de réglage (16) le long d'une direction d'extension principale de la vis de réglage (16).

3. Dispositif (4) selon la revendication 1 ou 2, **caractérisé en ce que**
le premier élément de mouvement (17) est relié au capteur optique (3) et le second élément de mouvement (18) est supporté de manière rotative sur le cadre de retenue (8).

4. Dispositif (4) selon la revendication 1, **caractérisé en ce que**
le premier écrou fileté (28) a une fente radiale (38), qui divise le premier écrou fileté (28) en deux zones de longueur (39, 40), les deux zones de longueur (39, 40) étant formées de sorte qu'au moins une zone de longueur (39, 40) soit élastiquement déformable par le vissage de la vis de réglage (16) dans le premier écrou fileté (28).

5. Dispositif (4) selon l'une quelconque des revendications précédentes,
**caractérisé en ce que**
le premier élément de mouvement (17) a une ouverture traversante (26), à travers laquelle passe une vis (19) pour fixer le premier élément de mouvement (17) au capteur optique (3).

6. Dispositif (4) selon l'une quelconque des revendications précédentes,
**caractérisé en ce que**
le second élément de mouvement (17) a une élévation (20), qui est insérée dans un évidement correspondant (21) du cadre de retenue (8) pour supporter de manière rotative le second élément de mouvement (17) sur le cadre de retenue (18).

7. Dispositif (4) selon l'une quelconque des revendications précédentes,
**caractérisé en ce que**
le dispositif de palier (11) a deux paliers (13), qui sont disposés sur des côtés opposés du cadre de retenue (8).

8. Dispositif (4) selon l'une quelconque des revendications précédentes,
**caractérisé en ce que**
le dispositif (4) a un élément ressort (22), qui est disposé entre le cadre de retenue (8) et le capteur optique (3) pour fournir une force de ressort agissant sur le capteur optique (3), la force de ressort agissant le long d'une direction de mouvement (34) du dispositif de réglage (15).

9. Dispositif (4) selon la revendication 8, **caractérisé en ce que**
l'élément ressort (22) est formé d'un fil et une première zone (42) de l'élément ressort (8) est reliée au cadre de retenue (8) et une seconde zone (43) de l'élément ressort (22) est disposée sur une élévation (44) correspondante du capteur optique (3).

10. Ensemble capteur (2) avec un dispositif (4) selon l'une quelconque des revendications précédentes et avec un capteur optique (3).

11. Véhicule automobile (1) avec un ensemble capteur (2) selon la revendication 10.
